# EUROPÄISCHE PATENTSCHRIFT

(11) **EP 0 381 069 B1**
(45) Veröffentlichungstag und Bekanntmachung des Hinweises auf die Patenterteilung: **27.10.1993**
(21) Anmeldenummer: 90101565.1
(22) Anmeldetag: 26.01.1990
(51) Int. Cl.: F16L 37/40, F16L 37/28, F16L 29/02

(54) **Kupplungsmuffe für hydraulische Leitungsverbindung**
Coupling sleeve for hydraulic connection lines
Manchon d'accouplement pour lignes d'interconnexion hydraulique

(30) Priorität: 31.01.1989 US 304699
(43) Veröffentlichungstag der Anmeldung: 08.08.1990
(73) Patentinhaber: DEERE & COMPANY, Moline, Illinois 61265 (US)
(72) Erfinder: Durant, Douglas Michael, Waterloo, Iowa 50702 (US); Kugler, Uwe Herbert, Cedar Falls, Iowa 50613 (US); Vaughn, Bennie Joe, Cedar Falls, Iowa 50613 (US); Nordquist, Douglas Wayne, Cedar Falls, Iowa 50613 (US); Delfs, Larry Marvin, Cedar Falls, Iowa 50613 (US)
(74) Vertreter: Feldmann, Bernhard

(56) Entgegenhaltungen:
- EP-A- 0 038 056
- EP-A- 0 108 344
- EP-A- 0 191 384
- DE-A- 2 836 261
- DE-A- 3 509 371
- GB-A- 2 186 046
- US-A- 4 371 004
- US-A- 4 373 551
- US-A- 4 485 845
- US-A- 4 676 269
- US-A- 4 745 948

## Beschreibung

Die Erfindung betrifft eine Kupplungsmuffe für hydraulische Leitungsverbindungen gemäß den Merkmalen des Oberbegriffes des Patentanspruches 1. Eine derartige Kupplungsmuffe ist durch die EP-A-0 191 384 bekannt geworden.

Es sind eine Reihe von Kupplungsmuffen bekannt, an die unter Druck stehende oder druckfreie Einsteckkupplungsteile (Schlauchkupplungsanschlüsse) an- bzw. abkuppelbar sind. Derartige Kupplungsmuffen finden vielseitige Anwendung in hydraulischen Kreisen, beispielsweise bei landwirtschaftlichen und industriellen Fahrzeugen. Durch die EP-A-0 038 056, die EP-A-0 191 384 und die EP-A-0 108 344 sind hebelbetätigbare Schnellkupplungen zur Leitungsverbindung bekannt geworden, bei denen ein Hebel bewegt werden muß, um ein Einsetzen oder ein Entfernen eines Einsteckkuppelteiles zu ermöglichen. Dies hat den Nachteil, daß für das Kuppeln beide Hände erforderlich sind, eine Hand zur Betätigung des Hebels und die andere Hand zum Einsetzen oder Entfernen des Einsteckkuppelteiles von der Kupplungsmuffe.

Dieses Problem wird in der Hydraulikindustrie durch eine Kupplung, welche keine hebelbetätigbare Nocken aufweist und durch Druck oder Zug ein Verbinden oder Lösen erlaubt, überwunden, wie es in der US-A-4,485,845 beschrieben wurde. Eine derartige Kupplung hat jedoch den Nachteil, daß sie sich nicht mit einer kontrollierten, geringen Kraftaufwendung lösen läßt, wie dies bei einer hebelbetätigten Kupplung der Fall ist, da die Hydraulikflüssigkeit in der Kupplung das Einsteckteil aus der das Einsteckteil aufnehmenden Kupplungsmuffe herausdrücken könnte, sofern hierfür lediglich ein geringer Kraftaufwand erforderlich wäre.

Schließlich geht aus der EP-A-0 038 056 eine Anordnung hervor, bei welcher durch einen Hebel alternativ eine von zwei benachbarten Kupplungsmuffen betätigt werden kann. Es ist jedoch kein Mechanismus bekannt geworden, durch den gleichzeitig mehrere Kupplungen entkuppelt werden können. Kupplungen werden häufig paarweise verwendet, so daß es vorteilhaft wäre, wenn das Paar sich gleichzeitig entkoppeln ließe.

Die mit der Erfindung zu lösende Aufgabe wird darin gesehen, eine Kupplungsmuffe anzugeben, die die vorteilhaften Charakteristiken einer hebelbetätigbaren Kupplung mit denen einer lediglich auf Grund von Zug- oder Druckkräften betätigbaren Kupplung verbindet. Insbesondere sollen die Kupplungen entweder durch Hebel- oder Druckeinwirkung verbindbar sein oder entsprechend entweder durch Hebel- oder Zugeinwirkung lösbar sein. Wenigstens eines der verfügbaren Kupplungs- oder Entkupplungsverfahren soll bei geringem Kraftaufwand durchführbar sein. Schließlich sollten sich Mehrfachkupplungen gleichzeitig lösen lassen.

Die Aufgabe wird erfindungsgemäß durch die Merkmale des kennzeichnenden Teils des Patentanspruches 1 gelöst.

Dabei wird eine Kupplungsmuffe mit einer in beide Richtungen verschiebbar gelagerten Steckhülse, welche an ihrer Aufnahmeseite mehrere Sperrkugeln aufweist, verwendet. Durch abgeschrägte Oberflächen auf der Innenseite einer Steuerhülse werden die Sperrkugeln in Eingriff mit einer Nut im Einsteckkuppelteil, das in die Kupplungsmuffe einsetzbar ist, gebracht. Die Steckhülse wird durch Federkraft in eine Ruhestellung gedrückt, in der die Sperrkugeln mit dem Einsteckkupplungsteil in Eingriff stehen und in dieser Lage von der Steuerhülse gehalten werden. Durch Bewegung der Steckhülse in eine der beiden axialen Richtungen werden die Sperrkugeln aus dem Einsteckkuppelteil ausgerückt, so daß sich das Einsteckkuppelteil durch Druck oder Zug in die Kupplungsmuffe hineinschieben oder aus dieser herausziehen läßt.

In der Steckhülse ist ein kolbenbetätigbarer Ventilkegel vorgesehen, durch den das dem Einsteckkupplungsteil zugewandte Ende der Kupplungsmuffe abdichtbar ist. Ist ein Einsteckkuppelteil eingesteckt, so bewirkt eine Betätigung des Kolbens, daß der Verschluß des Einsteckkupplungsteiles geöffnet wird, so daß ein Flüssigkeitsaustausch zwischen der Kupplungsmuffe und dem Einsteckkupplungsteil erfolgen kann.

Es ist ein durch einen Hebel betätigbarer Kurvenkörper am Ende der Steckhülse vorgesehen. Dieser Kurvenkörper erfüllt zwei Funktionen: Zum einen öffnet er ein Ablaßventil, um einen Abfluß für die Kolbenkammer zu schaffen, zum anderen verschiebt er die Steckhülse axial in eine Lage, in der die Sperrkugeln ausgerückt sind. Bei abgelassener Kolbenkammer läßt sich ohne großen Kraftaufwand die Steckhülse verschieben und der Hebel weiter bewegen, wodurch die Steckhülse in eine Lage gedrückt wird, in der die Sperrkugeln ausgerückt sind und ein kontrolliertes Entkuppeln des Einsteckkuppelteiles erlauben.

Vorzugsweise steht der Hebel mit Kurvenkörpern für mehrere Kupplungsmuffen in Verbindung, so daß mehrere Kupplungskörper gleichzeitig entriegelt werden können.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: eine bevorzugte Anordnung mit zwei erfindungsgemäßen Kupplungsmuffen, wobei in eine der beiden Kupplungsmuffen ein Einsteckkupplungsteil eingesteckt ist, und
- Fig. 2a bis 2c: unterschiedliche Lagen des Hebels und die hierdurch bedingten Eingriffe der Nockenoberflächen einer der Kupplungsmuffen gemäß Fig. 1.

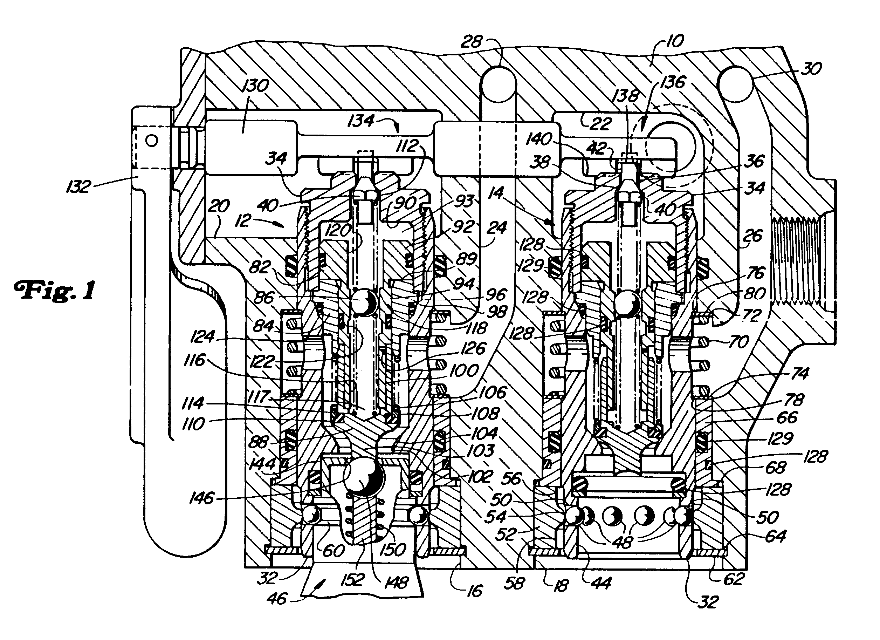

Gemäß Fig. 1 weist ein Ventilgehäuse 10 zwei erfindungsgemäße Kupplungsmuffen 12, 14 auf. Zur Vereinfachung der Beschreibung soll angenommen werden, daß die Vorder- und Rückseite und die linke und rechte Seite der Kupplungsmuffen 12, 14 der oberen und unteren bzw. der linken und rechten Seite in Fig. 1 entsprechen. Es versteht sich jedoch von selbst, daß die Kupplungen jede beliebige Lage einnnehmen können. Der Übersichtlichkeit halber wurden die meisten Bezugszeichen lediglich an einer der beiden in Fig. 1 dargestellten Kupplungen angebracht. Natürlich können für jeweils identische Teile der anderen Kupplung die gleichen Bezugszeichen verwendet werden.

Jede der Kupplungsmuffen 12, 14 ist in einer entsprechenden, sich stufenförmig erweiternden, in das Ventilgehäuse 10 eingelassenen Bohrung 16, 18 angeordnet. Die stufenförmigen Bohrungen 16, 18 münden jeweils in einer zugehörigen Ölsumpfkammer 20, 22, welche mit einem nicht dargestellten Sammelbehälter des Hydrauliksystems in Verbindung stehen. Jede Bohrung 16, 18 steht ferner mit einem Zugehörigen, in dem Ventilgehäuse 10 verlaufenden Speise/Rückflußkanal 24, 16, in Verbindung. Diese Kanäle 24, 26 sind über schematisch angedeutete Steuerventile 28, 30 mit einer nicht dargestellten Flüssigkeitsdruckquelle oder mit einer Rückflußleitung für das System verbindbar. Derartige Steuerventile 28, 30 sind allgemein bekannt und werden hier nicht näher beschrieben.

Jede der Kupplungsmuffen 12, 14 enthält eine hohle, zylindrische Steckhülse 32, welche gleitbar in der zugehörigen Bohrung 16, 18 angeordnet ist. Eine Endkappe 34 verschließt das vordere Ende jeder Steckhülse 32. Wenigstens die Endkappe 34, vorzugsweise jedoch die Endkappe 34 und das Oberteil der Steckhülse 32, erstrecken sich in die zugehörige Ölsumpfkammer 20, 22. Jede Endkappe 34 enthält ein Ablaßventil 36, durch das das Innere der Steckhülse 32 mit der zugehörigen Ölsumpfkammer 20, 22 verbindbar ist. Die Innenseite jeder Endkappe 34 ist als Ventilsitz 38 ausgebildet, gegen den ein Ventilkegel 40 zur Anlage bringbar ist, um das Ablaßventil 36 zu verschließen. Jeder Ventilkegel 40 trägt einen Ansatz 42, der sich durch die Ventilöffnung erstreckt und eine weiter unten beschriebene Aufgabe erfüllt. Der Ventilkegel 40 und der Ansatz 42 weisen vorzugsweise eine Form auf, wie sie im wesentlichen in der EP-A-0 038 056, beschrieben wurden.

Das hintere Ende jeder Steckhülse 32 enthält eine Aufnahmebohrung 44, die ein Einsteckkuppelteil 46 aufnehmen kann. Ein Teil eines typischen Einsteckkuppelteiles 46 ist gemäß Fig. 1 in die Aufnahmebohrung 44 der linken Kupplungsmuffe 12 eingesteckt, während sich in der rechten Kupplungsmuffe 14 kein derartiges Einsteckkuppelteil befindet. Wie es am besten aus der in Fig. 1 rechten Kupplungsmuffe 14 ersichtlich ist, nehmen die Steckhülsen 32 mehrere Sperrkugeln auf, die in entsprechenden, auf dem Umfang der Steckhülse 32 beabstandeten Bohrungen 50 liegen. Die Sperrkugeln 48 können radial in den Bohrungen 50 nach innen und außen bewegt werden. In bekannter Weise wird jedoch durch Vorsprünge bzw. Verengungen in den Bohrungen 50 verhindert, daß die Sperrkugeln 48 radial nach innen in die Aufnahmebohrung 44 fallen. Eine Bewegung der Sperrkugeln 48 radial nach außen wird durch die inneren Flächen der Steuerhülsen 52, welche jede der Steckhülsen 32 umgeben, verhindert. Die innere Fläche jeder Steuerhülse 52 weist einen nach innen gerichteten umlaufenden Steg 54 auf, welcher gemäß eines nach vorn und hinten geneigten Daches allmählich in abgesetzte Bereiche 56, 58 größeren Durchmessers beidseits des Steges 54 übergeht. Liegen die Sperrkugeln 48 benachbart zu dem Steg 54, so werden sie nach innen gedrückt und erstrecken sich in die Aufnahmebohrung 44 hinein, wo sie in eine geeignete Nut 60 in der Außenfläche eines Einsteckkuppelteiles 46, wie bei der in Fig. 1 linken Kupplungsmuffe 12 dargestellt, eingreifen können. Im Gegensatz hierzu können sich die Sperrkugeln 48 radial nach außen bewegen, wenn sie sich benachbart zu einem der beiden abgesetzten Bereiche 56, 58 befinden, wobei die Aufnahmebohrung 44 völlig freigegeben wird.

Wie noch erläutert werden wird, ist die Steckhülse 32 in eine solche Lage vorgespannt, in der die Sperrkugeln 48 benachbart zu dem Steg 54 der Steuerhülse 52 liegen. Die Steuerhülsen 52 werden durch Sicherungsringe 62, die von in den Bohrungen 16, 18 eingelassenen Nuten 64 aufgenommen werden, an einer Bewegung zur hinteren Seite der Kupplung gehindert. An einer Bewegung zur vorderen Seite der Kupplungsmuffen werden die Steuerhülsen 52 durch Anstoßen an die Abstandshülsen 66 gehindert. Die Abstandshülsen 66 liegen an den Schultern 68 an, welche durch jeweils eine der Stufen der stufenförmigen Bohrungen 16, 18 gebildet werden. Der innere Durchmesser der Abstandshülsen 66 ist vorzugsweise etwa gleich groß wie der äußere Durchmesser der Steckhülsen 32, so daß die Steckhülsen 32 eine zusätzliche Abstützung erhalten. Alternativ hierzu kann jede Abstandshülse 66 mit der zugehörigen ringförmigen Steuerhülse 52 einteilig ausgebildet sein.

Die Steckhülsen 32 sind durch Federn 70 und Halteringe 72, 74 in die Lage vorgespannt, die sie gemäß Fig. 1 einnehmen. An den Steckhülsen 32 sind Schultern 76, 78 angeformt, an denen sich die Halteringe 72, 74 abstützen. Der Haltering 72 kann sich auch an den Schultern 80 abstützen, die sich durch die stufenförmig ausgebildeten Bohrungen 16, 18 ergeben. Der Haltering 74 hingegen kann sich auch gegen das Vorderende der Abstandshülse 66 abstützen. Jede Druckfeder 70 ist zwischen den entsprechenden beiden Halteringen 72, 74 eingespannt.

Bei dieser Konstruktion wird bei einer Rückwärtsbewegung (d. h. gemäß Fig. 1 nach unten) der Steckhülse 32 aufgrund einer äußeren Kraft der Haltering 72 wegen seiner Anlage an der Schulter 76 der Steckhülse 32 zurück gedrückt. Der Haltering 74 wird dabei jedoch nicht bewegt, da er an dem vorderen (oberen) Ende der Abstandshülse 66 anliegt. Die Feder 70 wird somit zusammengedrückt, und bewegt bei nachlassender äußerer Kraft die Steckhülse 32 wieder zurück in die in der Figur 1 dargestellten Lage. Auf ähnliche Weise treibt eine Vorwärtsbewegung (nach oben) der Steckhülse 32 aufgrund einer äußeren Kraft den Haltering 74 wegen seiner Anlage an der Schulter 78 der Steckhülse 32 nach vorn, während der Haltering 72 seine Lage beibehält, da er an der Schulter 80 in dem Gehäuse 10 anliegt. Auch hierbei wird die Feder 70 zusammengedrückt und treibt bei Zurücknahme der äußeren auf die Steckhülse 32 aufgebrachten Kraft die Steckhülse 32 zurück in die Lage, die in der Figur 1 dargestellt ist. Auch wenn gemäß dem Ausführungsbeispiel die Federn 70 und die Halteringe 72, 74 benachbart zu den Kanälen 24, 26 liegen, können sie an beliebiger Stelle entlang der Steckhülse 32 angeordnet sein.

Wie bereits erwähnt wurde, sind die Steckhülsen 32 im wesentlichen hohl ausgebildet. Ihre hinteren Enden gehen in Aufnahmebohrungen 44 über, die Einsteckkupplungsteile 46 aufnehmen können. Zur Einstellung einer Gleichgewichtslage jeder Steckhülse 32 werden folgende vier Hauptteile verwendet: ein Kolben 82, ein Hubbegrenzer 84, eine Verschlußkugel 86 und ein Hauptventilkegel 88.

Jeder Kolben 82 läßt sich axial zwischen der inneren Stirnfläche 90 der Endkappe 34 und der Stirnfläche 89 des Hubbegrenzers 84 verschieben. Der äußere Durchmesser des Kolbenkopfes 92 ist in etwa gleich groß wie der innere Durchmesser der Seitenteile der Endkappe 34, so daß der Kolbenkopf 92 in der Endkappe 34 geführt wird. Ferner ist der Hubbegrenzer 84 ringförmig ausgebildet, und der äußere Durchmesser der Kolbenstange 94 ist im wesentlichen genauso groß, wie der innere Durchmesser des Hubbegrenzers 84, so daß die Kolbenstange 94 im Hubbegrenzer 84 geführt wird. Eine Bewegung des Hubbegrenzers 84 wird dadurch verhindert, daß ein nach außen stehender Flansch 96 des Hubbegrenzers 84 zwischen der Endkappe 34 und einer durch einen inneren Durchmesser der Steckhülse 32 ausgebildeten Schulter 98 eingespannt ist.

Der Hauptventilkegel 88 hat einen zylindrischen Ansatz 100, welcher das hintere (untere) Ende der Kolbenstange 94 umgibt. Das hintere Ende der Kolbenstange 94 weist einen etwas geringeren Durchmesser auf, als sein vorderer Teil, und der äußere Durchmesser des zylindrischen Ansatzes 100 des Hauptventilkegels 88 ist im wesentlichen gleich groß wie der innere Durchmesser des Hubbegrenzers 84, so daß die Kolbenstange 94 und der Hubbegrenzer 84 gemeinsam als Führung für den Hauptventilkegel 88 dienen. Der innere Durchmesser der Steckhülse 32 verengt sich unmittelbar vor der Aufnahmebohrung 44 zu einer Hauptventilöffnung 102. Im Bereich der Hauptventilöffnung 102 ist die Oberfläche der Steckhülse 32 als Ventilsitz 104 ausgebildet, gegen den sich der Hauptventilkegel 88 abstützen kann, um die Hauptventilöffnung 102 zu verschließen. Der Hauptventilkegel 88 ist gegen den Hauptventilsitz 104 durch eine Druckfeder 106 vorgespannt, die sich zwischen der Rückseite des Hubbegrenzers 84 und einem Ring 108, welcher den zylindrischen Ansatz 100 des Hauptventilkegels 88 umgibt, abstützt. Der Ring 108 ruht auf einem Dichtungsring 110 welcher den Hauptventilkegel 88 umgibt, und seinerseits auf einer Schulter des Hauptventilkegels 88 ruht.

Der Hauptventilkegel 88 ist durch die Druckfedern 112 und 114, welche sich größtenteils innerhalb einer zentralen Bohrung 116 innerhalb der Längsrichtung des Kolbens 82 erstrecken, auch gegen den Ventilsitz 104 vorgespannt. Insbesondere drückt ein Ende der Feder 112 gegen die Basis des Ablaßventilkegels 40, während deren anderes Ende gegen die Verschlußkugel 86 drückt. Ein Ende der Feder 114 drückt gegen die Verschlußkugel 86 während deren anderes Ende gegen die innere Stirnfläche des Hauptventilkegels 88 drückt.

Die zentrale Bohrung 116 im Kolben 82 weist einen nach innen hervorstehenden Abschnitt 118 und zwei gegenüber diesem Abschnitt 118 zurücktretende Bereiche 120, 122 mit größerem Innendurchmesser auf. Der Innendurchmesser des Abschnittes 118 ist im wesentlichen genauso groß wie der Außendurchmesser der Verschlußkugel 86, so daß ein Flüssigkeitsdurchtritt im großen und ganzen unterbunden wird, wenn die Verschlußkugel 86 sich im Bereich des Abschnittes 118 befindet. Im Gegensatz hierzu weisen die auf beiden Seiten des Abschnittes 118 liegenden Bereiche 120, 122 einen Innendurchmesser auf, der um ein genügendes Maß größer ist, als der Außendurchmesser der Verschlußkugel 86, so daß die Flüssigkeit leicht an der Verschlußkugel 86 vorbei strömen kann, wenn die Verschlußkugel 86 sich in einem der Bereiche 120, 122 befindet. Die Federn 112 und 114 drücken im Normalfall die Verschlußkugel 86 in eine solche Lage, in der sie mit dem Abschnitt 118 in Eingriff steht und einen Flüssigkeitsdurchtritt durch die zentrale Bohrung 116 verhindert. Die Feder 114 ist jedoch etwas stärker als die Feder 112, so daß ein größerer Druck auf der Vorderseite der Verschlußkugel 86 erforderlich ist, um diese in eine Lage zu verschieben, die benachbart zu dem Bereich 122 liegt, als der Druck, der auf der Rückseite der Verschlußkugel 86 erforderlich ist, um diese in eine benachbarte Lage zum Bereich 120 zu verschieben.

Auf der Umfangsfläche jeder der beiden Steckhülsen 32 befinden sich beabstandet zueinander mehrere Öffnungen 124, die einen Flüssigkeitsaustausch zwischen den Kanälen 24, 26 und dem Inneren der Steckhülse 32 zulassen. Ein Kanal 126, der klein genug ist, um als durchflußbegrenzende Öffnung zu dienen, ist in dem Kolben 82 vorgesehen und erlaubt einen Durchfluß von außerhalb des Kolbens 82 und des Hauptventilkegels 88 in den Unterteil der zentralen Bohrung 116 des Kolbens 82. Die Paßgenauigkeit zwischen dem Außendurchmesser des Kolbenansatzes 100, dem Hauptventilkegel 88 und dem Innendurchmesser des Hubbegrenzers 84 sollte ein genügendes Spiel aufweisen, um zwischen ihnen zu jeder Zeit einen Flüssigkeitsdurchtritt zu ermöglichen.

Alternativ oder zusätzlich kann die Paßgenauigkeit zwischen dem Außendurchmesser der Kolbenstange 94 und dem zylindrischen Ansatz 100 des Hauptventilkegels 88 lose genug ausgebildet sein, um zwischen ihnen einen Durchfluß zu ermöglichen, jedoch noch dicht genug, so daß die Durchgänge als durchflußbegrenzende Öffnungen dienen. Schließlich sind mehrere Dichtungen 128, 129 vorgesehen, durch die ein Durchfluß zwischen irgendwelchen Teilen der Kupplungsmuffen 12, 14, die nicht als Durchflußbegrenzungsöffnungen dienen, unterbunden wird. Die Oberflächen der Hauptdichtungen 129 bestehen vorzugsweise aus Material mit geringem Gleitwiderstand, wie beispielsweise Polytetrafluoroethylene (Teflon) oder graphitiertes Teflon.

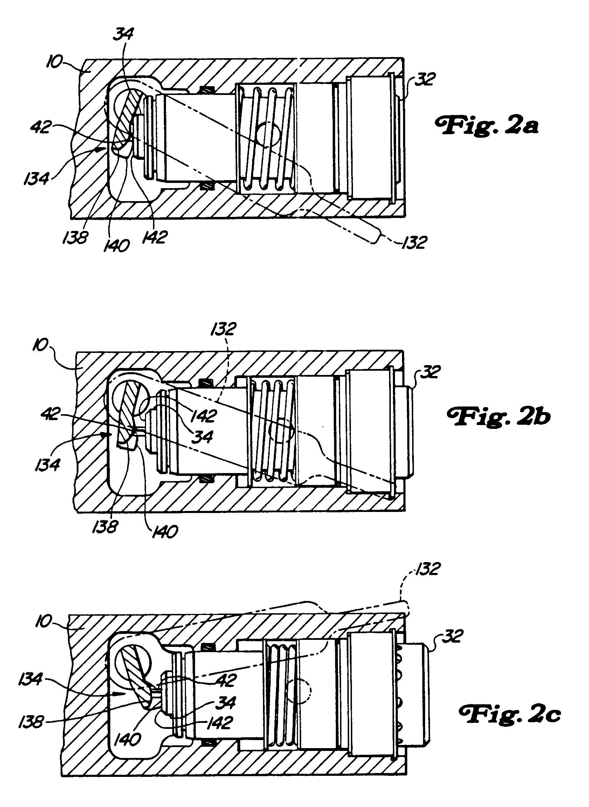

Wie noch näher beschrieben werden wird, werden die Kupplungsmuffen 12, 14 durch Kurvenflächen beeinflußt, die sich durch einen Hebel verstellen lassen. Die Kurvenflächen befinden sich vorzugsweise auf einem Auslösestab 130, der verdrehbar in dem Ventilgehäuse 10 gelagert und mit einem Ende mit einem Hebel 132 verbunden ist. Gemäß der in Fig. 1 dargestellten Ausgestaltung weist der Auslösestab 130 zwei Bereiche mit Kurvensätzen 134, 136 auf, von denen jeder mit einer zugehörigen Kupplungsmuffe 12, 14 in Verbindung steht. Wie es aus den Figuren 2a bis 2c hervorgeht, hat jeder Kurvensatz 134, 136 wenigstens zwei Nockenoberflächen: zum einen eine Kurvenfläche 138 zur Beeinflussung des Ansatzes 42 des Ablaßventils 36 und zum anderen eine Kurvenfläche 140 zur Beeinflussung der Vorderseite 142 der Endkappe 34. Wie in Fig. 1 dargestellt, weist jeder Kurvensatz 134, 136 vorzugsweise drei Kurvenflächen auf, wobei sich an eine mittlere Kurvenfläche 138 beidseits je eine äußere Kurvenfläche 140 anschließt. Die mittlere Kurvenfläche 138 greift vorzugsweise unter einem leichten Winkel an dem Ansatz 42 des Ablaßventiles 36 an, um dle Kraft herabzusetzen, die erforderlich ist, um den Verschluß zwischen dem Ventilkegel 40 und dem Ventilsitz 38 zu öffnen.

In Fig. 1 ist ein typisches Einsteckkupplungsteil 46, welches in eine Kupplungsmuffe 12 eingesteckt ist, zu dem Zweck dargestellt, die Wirkungsweise der vorliegenden Kupplungsmuffen zu erläutern. Das Einsteckkupplungsteil 46 enthält ein im wesentlichen zylindrisches Kopfteil 144, welches festsitzend in die Aufnahmebohrung 44 der Kupplungsmuffe 12 paßt. Wie bereits erwähnt, befindet sich in der äußeren umlaufenden Fläche des Einsteckkupplungskopfteiles 144 eine umlaufende Nut 60, in welche die Sperrkugeln 48 der Kupplungsmuffe 12 eingreifen. An dem Ende des Kopfteiles 144 befindet sich eine Öffnung 146, welche durch eine Verschlußkugel 148 verschließbar ist. Diese Verschlußkugel 148 ist durch eine Feder 150 in die Schließlage vorgespannt. Ein Anschlag 152 ist im Einsteckkuppelteil 46 vorgesehen, der die Bewegung der Verschlußkugel 148 begrenzt, so daß sich diese nicht beliebig weit von der Öffnung 146 weg verschieben läßt.

### Wirkungsweise:

Die Kupplungsmuffe entsprechend der vorliegenden Erfindung kann mit einem Einsteckkuppelteil entweder durch Eindrücken des Einsteckkuppelteiles in die Kupplungsmuffe oder durch Verwendung des Hebels 132 verbunden werden. Entsprechend kann das Einsteckkuppelteil entweder durch ausreichenden Zug oder durch Betätigung des Hebels 132 von der Kupplungsmuffe gelöst werden. Einzelheiten der Wirkungsweise werden im folgenden beschrieben:
Kuppeln durch Druck: Um durch Druck ein Einsteckkuppelteil 46 mit einer Kupplungsmuffe 12 zu verbinden, wird das Einsteckkuppelteil 46 einfach in die Aufnahmebohrung 44 der Kupplungsmuffe 12 eingedrückt. Wenigstens ein Teil des Einsteckkupplungskopfteiles 144, das vor der Nut 60 liegt, hat einen größeren Durchmesser als die Nut 60, so daß mit dem Hineindrücken des Einsteckkupplungsteiles 46 in die Aufnahmebohrung 44 die Sperrkugeln 48 nach vorn gedrückt werden. Hierdurch wird die ganze Steckhülse 32 nach vorn gedrückt. Durch diese Vorwärtsbewegung kommt der Ansatz 42 des Ablaßventilkegels 40 in Kontakt mit der Kurvenfläche 138. Eine weitere Bewegung in diese Richtung drückt die Kurvenfläche 138 zurück in die in Fig. 2a dargestellte Lage. In dieser Lage drückt der auf dem Ansatz 42 lastende Druck den Ventilkegel 40 von seinem Ventilsitz 38, so daß das Ablaßventil 36 öffnet und ein Flüssigkeitsdurchtritt aus der Hydraulikkammer 93 (Fig. 1) in die Ölsumpfkammer 20 möglich ist. Die Vorwärtsbewegung der Steckhülse 32 verschiebt schließlich die Sperrkugeln 48 weit genug, um sie in die Nachbarschaft des abgesetzten Bereiches zu bringen, so daß sie sich radial nach außen aus der Aufnahmeöffnung 44 herausbewegen können. Durch diese Bewegung werden die verschiedenen Federn in der Kupplungsmuffe 12 zusammengedrückt. Sobald der Druck auf das Einsteckkupplungsteil 46 nachläßt, verschieben die Federn die Steckhülse 32 zurück in die Lage, die in Fig. 1 dargestellt ist, wobei der Ventilsitz 40 sich schließt und die Sperrkugeln 48 eng in die Sperrnut 60 des Einsteckkupplungsteiles 46 eingreifen.

Wenn das Einsteckkupplungsteil 46 in die Aufnahmebohrung 44 eingeführt wird, stört der Ansatz 103 des Hauptventilkegels 88 gegen die Verschlußkugel 148. Die Kupplungsmuffe 12 steht wegen der oben beschriebenen Öffnung des Ventilkegels 40 nicht unter Hydraulikdruck. Steht das Einsteckkupplungsteil 46 unter Hydraulikdruck, so drückt die Verschlußkugel 148 gegen die Öffnung 146 und drückt den Hauptventilkegel 88 nach vorn. Hierdurch wird auch der Kolben 82 nach vorn gedrückt und das Volumen der Kammer 93 vermindert. Steht das Einsteckkupplungsteil 46 nicht unter Hydraulikdruck, hängt die Lage des Hauptventilkegels 88 und der Verschlußkugel 148 innerhalb der Steckhülse 32 von der relativen Spannung der Feder 150 des Einsteckkupplungsteiles 46 und der Federn 106, 112 und 114 der Kupplungsmuffe 12 ab.

In beiden Fällen ist es wünschenswert, wenn, wie in Fig. 1 dargestellt, die Verschlußkugel 148 durch den Ansatz 103 des Hauptventilkegels 88 ganz zurück gegen den Anschlag 152 gedrückt wird, um einen maximalen Flüssigkeitsaustausch zwischen den beiden Kupplungsteilen 12, 46 zu ermöglichen. Um dies zu erreichen, wird, sobald das Einsteckkupplungsteil 46 mechanisch eingerastet ist, das Steuerventil 28 geöffnet, so daß unter Druck stehende Flüssigkeit an die Speiseleitung 24 geliefert wird. Diese Flüssigkeit fließt dann durch die Öffnung 124 und den Kanal 126 in den hinteren Teil 117 der zentralen Bohrung 116 und treibt die Verschlußkugel 86 nach vorn bis diese sich im ausgebuchteten Bereich 120 befindet, so daß die Flüssigkeit in die Kammer 93 fliegen kann. Mit steigendem Druck in der Kammer 93 wird der Kolben 82 zurückgetrieben und drückt seinerseits den Hauptventilkegel 88 soweit zurück, daß dieser die Verschlußkugel 148 gegen den Anschlag 152 drückt. Der Druck in der Kammer 93 steigt dann weiter an, bis er sich von dem Druck in dem hinteren Teil 117 der zentralen Bohrung 116 lediglich um den Betrag unterscheidet, der durch die Kraft der Federn 112, 114 aufgebracht wird, so daß die Verschlußkugel 86 sich zurück zu dem Abschnitt 118 bewegt und einen weiteren Durchfluß in die Kammer 93 unterbindet. Damit ist die stabile Betriebslage der Kupplungsmuffe 12 erreicht, wie sie in Fig. 1 dargestellt ist.

Nachdem diese Lage eingenommen ist, kann das Steuerventil 28 so betätigt werden, daß unter Druck stehende Flüssigkeit an den Kanal 24 angelegt wird oder der Kanal 24 mit einem Sammelbehälter verbunden wird. In beiden Fällen bleibt die Öffnung 146 wegen der durch die Verschlußkugel 86 in der Kammer 93 eingefangenen Flüssigkeit offen. Der Mechanismus verhindert auch ein kurzzeitiges Schließen des Einsteckkupplungsteiles 46 aufgrund einer durch das Einsteckkupplungsteil 46 verlaufenden plötzlichen Stoßwelle, z. B. einer Stoßwelle, die auftritt, wenn der Zylinder, an den das Einsteckkupplungsteil 46 angeschlossen ist, von außen einen plötzlichen Stoß erhält. Derartige Stoßwellen sind gewöhnlich ganz kurz. Auch wenn die Stoßwelle in der Lage sein sollte, den Kolben 92 etwas nach oben zu verschieben, wodurch die Verschlußkugel 148 die Öffnung 146 etwas verschließt, so drückt doch der kumulative Druck in der Kammer 93 den Kolben 82 zurück nach unten, so daß das Einsteckkupplungsteil 46 offen bleibt und wieder ganz öffnet, sobald die Stoßwelle abgeklungen ist. Selbst wenn der plötzliche Druckanstieg in der Kammer 93 ausreicht, um die Verschlußkugel 86 nach unten in den Bereich 122 zu verschieben, kann die Flüssigkeit die zentrale Bohrung 116 wegen der Durchflußbegrenzung der Öffnung 126 nicht sehr schnell verlassen, so daß auch in diesem Fall das Einsteckkupplungsteil 46 offen bleibt. Dieser Flüssigkeitsdruck wird daher nach oben in die Kammer 93 abgebaut, nachdem die Druckwelle abgeklungen ist.

Auch wenn es grundsätzlich nicht erwünscht ist, daß Flüssigkeit aus der Kammer 93 durch den Kanal 126 abfließt, so ist dies dann von Vorteil, wenn die Flüssigkeit in der Kammer 93 sich übermäßig erwärmt. Es wird eine Feder 114 mit einer solchen Spannung ausgewählt, die bei genügender thermischer Ausdehnung der Flüssigkeit in der Kammer 93 die Verschlußkugel 86 in den Bereich 122 verschiebt, so daß ein Flüssigkeitsabfluß durch die zentrale Bohrung 116 und den Kanal 126 möglich ist, um den Überdruck abzubauen.

Entkuppeln durch Zug: Das Einsteckkupplungsteil 46 kann einfach von der Kupplungsmuffe 12 durch Herausziehen gelöst werden. Der Bereich des Einsteckkupplungskopfteiles 144 mit dem großen Durchmessser verschiebt auch beim Lösen die Sperrkugeln 48 und die Steckhülse 32, diesmal nach hinten. Diese Bewegung bringt die Sperrkugeln 48 in den abgesetzten Bereich 58, in den sie radial nach außen aus der Aufnahmebohrung 44 hinaustreten können, wodurch es dem Einsteckkupplungsteil 46 ermöglicht wird, aus der Aufnahmebohrung 44 herauszugleiten. Die Feder 150 drückt die Verschlußkugel 148 des Einsteckkupplungsteiles 46 nach oben gegen die Öffnung 146, wodurch das Einsteckkupplungsteil 46 verschlossen wird. Die Federn 106, 112 und 114 drücken den Hauptventilkegel 88 nach unten gegen den Ventilsitz 104, um die Kupplungsmuffe 12 zu verschließen.

Kuppeln mittels Hebel: In Fig. 2b ist die neutrale Lage des Hebels 132 dargestellt. In dieser Lage sind die Kurvenfläche 140 und die Vorderseite 142 der Entkappe 32 zueinander beabstandet. Vorzugsweise liegt auch ein kleiner Zwischenraum zwischen der Kurvenfläche 138 und dem Ansatz 42 des Ventilkegels 40, so daß der Ventilkegel 40 nicht zufällig durch ein Wackeln an der Kurvenfläche 138 geöffnet wird, z. B. bei Bewegungen über unebenem Gelände.

Für das Kuppeln mit dem Hebel 132 wird dieser in eine Lage bewegt, die der in Fig. 2c dargestellten entspricht. Hierdurch wird zunächst die Kurvenfläche 138 in Kontakt mit dem Ansatz 42 des Ventilkegels 40 gebracht, wobei das Ablaßventil 36 und die Ablaßkammer 93 geöffnet werden. Diese Öffnung erfolgt in ganz ähnlicher Art, wie sie bereits bei dem Kuppeln durch Druck beschrieben wurde. Die Kurvenfläche 140 tritt dann in Kontakt mit der Vorderseite 142 der Endkappe 34, wodurch die Endkappe 34 und die an ihr befestigte Steckhülse 32 nach hinten gedrückt werden. Hierdurch werden die Sperrkugeln 48 in den abgesetzten Bereich 58 verschoben, in dem sie radial aus der Aufnahmebohrung 44 austreten können. Das Einsteckkupplungsteil 46 kann somit in die Aufnahmebohrung 44 eingesetzt werden, ohne daß ein besonderer Druck aufgebracht zu werden braucht. Mit der Verschiebung der Steckhülse 32 wird gleichzeitig die Feder 70 zusammengedrückt, so daß die Steckhülse 32 bei Entlastung durch den Hebel 132 wieder nach vorn gedrückt wird. Hierdurch gelangen die Sperrkugeln 48 wieder in den Bereich des Steges 54 und werden nach innen in die Aufnahmebohrung 44 gedrückt und in Eingriff mit der Nut 60 im Einsteckkuppelteil 46 gebracht. Der Einkupplungsvorgang wird durch Verstellen des Ventiles 28 auf im wesentlichen gleiche Art abgeschlossen, wie sie in Verbindung mit dem Kuppeln durch Druck beschrieben wurde.

Entkuppeln mittels Hebel: Ist ein Einsteckkuppelteil 46 mit der Kupplungsmuffe 12 gekuppelt, so erfolgt durch Bewegung des Hebels 132 in eine Lage, wie sie in Fig. 2c dargestellt ist, ein Entkuppeln der Kupplungsteile 12, 46 unter beschränktem Kraftaufwand. Wird der Hebel 132 in die in Fig. 2c dargestellte Lage bewegt, so wird auch hier zunächst der Ventilkegel 40 geöffnet, um den Druck aus der Kammer 93 abzulassen. Durch eine weitere Bewegung des Hebels 132 wird die Steckhülse 32 so weit nach hinten gedrückt, bis die Sperrkugeln 48 sich in dem abgesetzten Bereich 58 befinden und radial aus der Aufnahmebohrung 44 herausgedrückt werden können. In dieser Lage wird das Einsteckkupplungsteil 46 durch die gemeinsame Kraft der Federn 106, 112, 114 und 150 aus der Aufnahmebohrung 44 gedrückt. Auch hier drückt die Feder 150 die Sperrkugel 148 gegen die Öffnung 146, um das Einsteckkupplungsteil 46 abzusperren, und die Federn 106, 112 und 114 verschieben den Hauptventilkegel 88, um die Kupplungsmuffe 12 zu verschließen.

Auch wenn vorstehend das Kuppeln und Entkuppeln mittels Hebel 132 lediglich in Verbindung mit einer Kupplungsmuffe 12 beschrieben wurde, ist es offensichtlich, daß durch Betätigung des Hebels 132 gleichzeitig alle Kupplungen, die mit dem Hebel 132 in Verbindung stehen, entkuppelt werden können. Ferner ist eine Entkupplung durch Betätigung des Hebels 132 einer solchen durch Zug am Einsteckkupplungsteil 46 vorzuziehen, da im ersten Fall ein Teil der in den Kupplungsmuffen 12, 14 befindlichen Flüssigkeit durch das Ablaßventil 36 zu dem Vorratsbehälter abfließen kann, so daß der Flüssigkeitsverlust beim Entkuppeln klein bleibt.

Auch wenn das Kuppeln mehrerer Ventile mit einem Hebel möglich ist, ist es etwas beschwerlich, wenn unabhängige Schläuche einbezogen sind, da alle Schläuche so lange in den Kupplungsmuffen gehalten werden müssen, bis der Hebel wieder freigegeben ist. Dieses Problem kann jedoch dadurch überwunden werden, daß die verschiedenen Schläuche durch eine Haltevorrichtung oder dergleichen so gehalten werden, daß sie sich in einem geeigneten Abstand zu den Kupplungsmuffen befinden. In diesem Fall kann der Hebel betätigt werden, woraufhin alle Schläuche gleichzeitig nach vorn in die Kupplungsmuffen bewegt werden und der Hebel dann wieder freigegeben wird.

Wenn dies gewünscht wird, kann der Hebel dazu verwendet werden, alle Kupplungen vor einem Kuppeln drucklos zu machen, d. h. der Hydraulikdruck in den Kupplungsmuffen wird abgebaut. Dies kann durch eine Vorwärtsbewegung des Hebels erreicht werden, bei der der Hebel mit den verschiedenen Abflußventilkegeln der Kupplungsmuffen in Eingriff tritt. Der Betrag der für das Hereindrücken des Einsteckkupplungsteiles erforderlichen Kraft hängt von dem anfänglichen Druck in der Kupplungsmuffe ab. Indem der Hebel verwendet wird, um die Kupplungsmuffen drucklos zu machen, kann daher die erforderliche Druckkraft vermindert werden.

Alternativ zur vorstehenden Beschreibung kann der Ansatz 100 des Hauptventilkegels 88, der gemäß der Darstellung die Kolbenstange 94 umgibt, sich auch innerhalb der zentralen Bohrung 116 erstrecken, wie dies beispielsweise aus der EP-A-0 191 384 hervorgeht. Ferner kann der Auslösestab 130 an Stelle von zwei Kupplungsmuffen 12, 14 auch mehr oder weniger als zwei Kupplungen betätigen.

## Patentansprüche

1. Hydraulische Kupplungsmuffe (12, 14) mit
a) einem Gehäuse (10), mit einer stufenförmig ausgebildeten Bohrung (16, 18), einer Sumpfkammer (20, 22) an einem Ende der Bohrung (16, 18) und einem Flüssigkeitskanal (24, 26), der mit der Bohrung (16, 18) in Verbindung steht,
b) einer hohlen, im wesentlichen zylindrischen Steckhülse (32), die gleitbar in der Bohrung (16, 18) angeordnet ist und mit einem Ende an der Sumpfkammer (20, 22) angrenzt und am anderen Ende eine Aufnahme enthält, mit
1) einer Aufnahmeöffnung (44) zur Aufnahme eines Einsteckkupplungsteiles (46), in deren Bereich sich mehrere, im wesentlichen radial ausgerichtete, auf dem Umfang der Steckhülse (32) zueinander beabstandete Bohrungen (50) befinden,
2) mehreren in den Bohrungen (50) angeordneten Sperrkugeln (48) und
3) einem Hauptventilsitz (104), der durch eine innere Oberfläche der Steckhülse (32) in der Nähe der Aufnahmeöffnung (44) gebildet ist,
c) einer ringförmigen Steuerhülse (52), die das Aufnahmeöffnungsende der Steckhülse (32) umgibt und deren Innenfläche einen Steg (54) und einen zum Steg (54) ersten abgesetzten Bereich (58) größeren Durchmessers aufweist, wobei die Steuerhülse (52) die Sperrkugeln (48) in die Aufnahmeöffnung (44) drückt, wenn die Sperrkugeln (48) sich im Bereich des Steges (54) befinden, und eine Bewegung der Sperrkugeln (48) aus dem Querschnitt der Aufnahmeöffnung (44) heraus ermöglicht, wenn die Sperrkugeln (48) sich in dem abgesetzten Bereich (58) befinden,
d) einem ersten Haltering (72), dessen eine Seite mit einer ersten Schulter (76) der Steckhülse (32) und einer Schulter (80) des Gehäuses (10) in Eingriff bringbar ist und an dessen anderer Seite eine Steckhülsenfeder (70) angreift, die zwischen dem ersten Haltering (72) und der Steuerhülse (52) zusammengedrückt ist,
e) einer in die Sumpfkammer (20, 22) hineinragenden Endkappe (34), die das Innere der Steckhülse (32) gegen die Sumpfkammer (20, 22) verschließt und zur Verschiebung der Steckhülse (32) mit einer durch einen Hebel (132) verstellbaren Kurvenfläche (140) in Eingriff steht,
f) einem in der Endkappe (34) und der Steckhülse (32) gleitbar angeordneten Kolben (82) mit
1) einem Kolbenkopf (92), der gleitbar von der Endkappe (34) aufgenommen wird, wobei zwischen dem Kolbenkopf (92) und der Endkappe (34) eine Kolbenkammer (93) ausgebildet ist, und
2) einer Kolbenstange (94), die sich in Richtung Aufnahmeöffnung (44) erstreckt,
g) Mitteln, durch die eine Durchflußverbindung zwischen dem Flüssigkeitskanal (24, 26) und der Kolbenkammer (93) geschaffen wird,
h) Ventilmitteln (36), die durch Betätigung des Hebels (132) oder durch eine Verschiebung der Steckhülse (32) in die zur Aufnahmeöffnung (44) entgegengesetzte Richtung eine Druckentlastung der Kolbenkammer (93) herbeiführen,
i) einem Hauptventilkegel (88), der verschiebbar mit der Kolbenstange (94) in Verbindung steht und mit dem Hauptventilsitz (104) zusammenwirkt, um die Aufnahmeöffnung (44) gegen den übrigen Teil der Steckhülse (32) abzudichten, und
j) Federmitteln zum Vorspannen des Hauptventilkegels (88) gegen den Hauptventilsitz (104), dadurch gekennzeichnet,
k) daß die Steuerhülse (52) einen zum Steg (54) zweiten abgesetzten Bereich (56) größeren Durchmessers aufweist, derart, daß sich die beiden abgesetzten Bereiche (56, 58) beidseits des Steges (54) befinden,
l) daß ein zweiter Haltering (74) vorgesehen ist, dessen eine Seite mit einer zweiten Schulter (78) der Steckhülse (32) und mittel- oder unmittelbar mit der Steuerhülse (52) in Eingriff bringbar ist und an dessen anderer Seite die Steckhülsenfeder (70) angreift, derart, daß sich die Steckhülse (32) axial in beide Richtungen aus ihrer Ruhelage, in der die beiden Halteringe (72, 74) an den zugehörigen Schultern (76, 80; 78) bzw. der Steckhülse (32) oder einer Abstandshülse (66) anliegen, verschieben läßt, wobei die Steckhülsenfeder (70) zusammengedrückt wird.

2. Kupplungsmuffe nach Anspruch 1, gekennzeichnet durch
a) eine Endkappe (34), die einen Ablaßkanal (36) enthält, der zwischen der Kolbenkammer (93) und der Sumpfkammer (20, 22) verläuft,
b) einen Ablaßventilkegel (40), der in dem Ablaßkanal (36) angeordnet ist und gegen einen Ventilsitz arbeitet, um den Ablaßkanal (36) abzudichten, und der einen Ansatz (42) trägt, welcher sich durch den Ablaßkanal (36) nach außen hindurch erstreckt,
c) eine Nockenwelle (130), die drehbar im Gehäuse (10), benachbart zur Endkappe (34), gelagert ist und eine Kurvenoberfläche (140) aufweist, die bei Drehung mit der Endkappe (34) in Eingriff tritt und
d) einen Hebel (132), durch den sich die Nockenwelle (130) verdrehen läßt, und
e) eine Kurvenfläche (138) auf der Nockenwelle (130), die bei Drehung der Nockenwelle (130) mit dem Ansatz (42) in Eingriff tritt, wobei die Endkappe (34) und die Kurvenfläche (138) so geformt sind, daß bei einer Verdrehung der Nockenwelle (130) oder Verschiebung der Steckhülse (32) zuerst die Ablaßventilkurvenfläche (138) gegen den Ansatz (42) drückt, bevor die Endkappenkurvenfläche (140) gegen die Endkappe (34) drückt.

3. Kupplungsmuffe nach Anspruch 1 oder 2, dadurch gekennzeichnet, daß die Mittel, durch die eine Durchflußverbindung zwischen dem Flüssigkeitskanal (24, 26) und der Kolbenkammer (93) geschaffen wird, eine zentrale Bohrung (116), die sich wenigstens über einen Teil des Kolbens (82) von dem Kolbenkopf (92) zur Kolbenstange (94) erstreckt, und einen im wesentlichen radialen Kanal (126) in der Kolbenstange (94), der das Äußere der Kolbenstange (94) mit der zentralen Bohrung (116) verbindet, enthalten.

4. Kupplungsmuffe nach einem der Ansprüche 1 bis 3, dadurch gekennzeichnet, daß die Mittel, durch die eine Durchflußverbindung zwischen dem Flüssigkeitskanal (24, 26) und der Kolbenkammer (93) geschaffen wird, wenigstens einen in der Steckhülse (32) eingelassenen Durchtritt (124) enthalten, der eine Durchflußverbindung zwischen dem Inneren der Steckhülse (32) und dem in dem Gehäuse (10) verlaufenden Kanal (24, 26) bildet, wobei der wenigstens eine Durchtritt (124) sich bezüglich des Hauptventilsitzes (104) auf der der Aufnahmeöffnung (44) gegenüberliegenden Seite der Steckhülse (32) befindet.

5. Kupplungsmuffe nach einem der Ansprüche 1 bis 4, gekennzeichnet durch
a) eine zentrale Bohrung (116) in dem Kolben (82) mit einem verengten, mittleren Abschnitt (118), an den sich auf beiden Seiten ausgebuchtete, erweiterte Bereiche (120, 122) anschließen,
b) eine in der zentralen Bohrung (116) des Kolbens (82) bewegliche Verschlußkugel (86), deren Außendurchmesser in etwa so groß wie der Innendurchmesser des verengten Abschnittes (118), jedoch kleiner als die Innendurchmesser der erweiterten Bereiche (120, 122) ist,
c) eine erste Verschlußkugelfeder (112), die sich zwischen dem Ablaßventilkegel (40) und der Verschlußkugel (86) erstreckt und den Ablaßverschlußkegel (40) gegen die Ablaßöffnung (36) sowie die Verschlußkugel (86) von der Ablaßöffnung (36) wegdrückt und
d) eine zweite Verschlußkugelfeder (114), die sich zwischen der Verschlußkugel (86) und dem Hauptventilkegel (88) erstreckt und den Hauptventilkegel (88) auf den Ventilsitz (104) sowie die Verschlußkugel (86) in Richtung Ablaßöffnung (36) drückt.

6. Kupplungsmuffe nach Anspruch 5, dadurch gekennzeichnet, daß der radiale Kanal (126) in der Kolbenstange (94) mit der zentralen Bohrung (116) an einer Stelle in Verbindung steht, die sich bezüglich des verengten Bereiches (118) auf der dem Kolbenkopf (92) gegenüberliegenden Seite befindet.

7. Kupplungsmuffe nach einem der Ansprüche 3 bis 6, dadurch gekennzeichnet, daß die Größe des in die Kolbenstange (94) eingelassenen radialen Kanales (126) so gewählt ist, daß dieser als Durchflußbegrenzungsblende wirkt.

8. Kupplungsmuffe nach einem der Ansprüche 1 bis 7, dadurch gekennzeichnet, daß innerhalb der Steckhülse (32) ein ringförmiger Hubbegrenzer (84) zwischen der Endkappe (34) und einer im Inneren der Steckhülse (32) angeformten Schulter (98) befestigt ist, der eine Fortbewegung des Kolbens (82) weg von der Endkappe (34) begrenzt.

9. Kupplungsmuffe nach einem der Ansprüche 1 bis 8, dadurch gekennzeichnet, daß der Hauptventilkegel (88) eine Sachbohrung aufweist, in die sich wenigstens ein Teil der Kolbenstange (94) erstreckt.

10. Kupplungsmuffe nach Anspruch 8 oder 9, dadurch gekennzeichnet, daß der äußere Durchmesser wenigstens eines ersten Bereiches des Hauptventilkegels (88) in etwa gleich groß ist, wie der Innendurchmesser des ringförmigen Hubbegrenzers (84), und daß der erste Bereich innerhalb des Hubbegrenzers (84) gleitbar angeordnet ist.

11. Kupplungsmuffe nach Anspruch 10, dadurch gekennzeichnet, daß ein zweiter Bereich des Hauptventilkegels (88) einen größeren Durchmesser als der erste Bereich aufweist und daß eine Druckfeder (106) zwischen dem zweiten Bereich und dem ringförmigen Hubbegrenzer (84) eingespannt ist.

12. Kupplungsmuffe nach einem der Ansprüche 1 bis 11, dadurch gekennzeichnet, daß mit einem einzigen Hebel (132) die Nockenwellen (132) für mehrere Kupplungen betätigbar sind.

13. Kupplungsmuffe nach Anspruch 12, dadurch gekennzeichnet, daß die Nockenwellen als ein in dem Gehäuse (10) gelagerter Stab (132) ausgebildet sind, an dem entsprechende Kurvenflächen (138, 140) zur Beeinflussung jeder der Kupplungen angeformt sind, und daß sich der Stab (132) durch den einen Hebel (132) verdrehen läßt.

14. Kupplungsmuffe nach einem der Ansprüche 1 bis 13, dadurch gekennzeichnet, daß zwei Kupplungsmuffen zu einer Einheit zusammengefaßt sind.

## Claims

1. Hydraulic coupling sleeve (12, 14) with
a) a casing (10), with a step-shaped bore (16, 18), a sump chamber (20, 22) at one end of the bore (16, 18), and with a fluid duct (24, 26) which communicates with the bore (16, 18),
b) a hollow, substantially cylindrical plug-in sleeve (32), which is disposed to slide in the bore (16, 18) and with one end borders the sump chamber (20, 22), and at the other end includes a receiving means, with
1) a receiving opening (44) for accommodating a plug-in coupling portion (46), in the region of which are located a plurality of substantially radially oriented bores (50, which are spaced apart relative to one another on the circumference of the plug-in sleeve (32),
2) a plurality of locking balls (48) disposed in the bores (50), and
3) a main valve seat (104) formed by an inner surface of the plug-in sleeve (32) close to the receiving opening (44),
c) an annular control sleeve (52) which surrounds the end of the receiving opening of the plug-in sleeve (32) and whose inner surface includes a web (54) and a first region (58) of larger diameter, offset to the web (54), the control sleeve (52) pressing the locking balls (48) into the receiving opening (44), when the locking balls (48) are located in the region of the web (54), and enabling a movement of the locking balls (48) out of the cross-section of the receiving opening (44), when the locking balls (48) are located in the offset region (45),
d) a first retaining ring (72), one side of which may be brought into engagement with a first shoulder (76) of the plug-in sleeve (32) and a shoulder (80) of the casing (10), and on the other side of which a plug-in sleeve spring (70) engages, which is compressed between the first retaining ring (72) and the control sleeve (52),
e) an end cap (34) projecting into the sump chamber (20, 22), and which closes off the interior of the plug-in sleeve (32) from the sump chamber (20, 22), and, in order to displace the plug-in sleeve (32), is in engagement with a cam surface (140) which is adjustable by means of a lever (132),
f) a piston (82), slidably disposed in the end cap (34) and in the plug-in sleeve (32), with
1) a piston head (92) slidably accommodated by the end cap (34), a piston chamber (93) being formed between the piston head (92) and the end cap (34), and
2) a piston rod (94), extending in the direction of the receiving opening (44),
g) means by which a throughflow connection is established between the fluid duct (24, 26) and the piston chamber (93),
h) valve means (36) which produce pressure release in the piston chamber (93) by actuation of a lever (132) or by a displacement of the plug-in sleeve (32) in the direction opposite to the receiving opening (44),
i) a main valve cone (88), which is in movable connection with the main valve seat (104), in order to seal the receiving opening (44) off from the remaining portion of the plug-in sleeve (32), and
j) spring means for pre-tensioning the main valve cone (88) against the main valve seat (104), characterised in that
l) a second retaining ring (74) is provided, one side of which may be brought into engagement with a second shoulder (78) of the plug-in sleeve (32), and directly or indirectly with the control sleeve (52), and on the other side of which the plug-in sleeve spring (70) engages in such a way that the plug-in sleeve (32) may be displaced axially in both directions out of its inoperative position, in which both retaining rings (72, 74) abut against the associated shoulders (76, 80; 78) or the plug-in sleeve (32) or a spacer sleeve (66), the plug-in sleeve spring (70) being compressed.

2. Coupling sleeve according to claim 1, characterised by
a) an end cap (34) containing an outlet duct (36) extending between the piston chamber (93) and the sump chamber (20, 22),
b) an outlet valve cone (40) disposed in the outlet duct (36) and operating against a valve seat in order to seal off the outlet duct (36), and which carries an extension (42) which extends outward through the outlet duct (36),
c) a cam shaft (130) rotatably mounted in the casing (10) adjacent to the end cap (34), and having a cam surface (140) which engages with the end cap (34) upon rotation, and
d) a lever (132) by means of which the cam shaft (130) can be rotated, and
e) a cam surface (138) on the cam shaft (130), and which, upon rotation of the cam shaft (130) engages with the extension (42), the end cap (34) and the cam surface (138) being so shaped that, upon a rotation of the cam shaft (130) or displacement of the plug-in sleeve (32), firstly the outlet valve cam surface (138) presses against the extension (42), before the end cap cam surface (140) presses against the end cap (34).

3. Coupling sleeve according to claim 1 or 2, characterised in that the means by which a throughflow connection is established between the fluid duct (24, 26) and the piston chamber (93), include a central bore (116) which extends at least over a portion of the piston (82) from the piston head (92) to the piston rod (94), and a substantially radial duct (126) in the piston rod (94) which connects the exterior of the piston rod (94) with the central bore (116).

4. Coupling sleeve according to one of claims 1 to 3, characterised in that the means by which a throughflow connection is established between the fluid duct (24, 26) and the piston chamber (93), include at least one passage (124) let into the plug-in sleeve (32), forming a throughflow connection between the interior of the plug-in sleeve (32) and the duct (24, 26) extending through the casing (10), the at least one passage (124) being located relative to the main valve seat (104) on the side of the plug-in sleeve (32) opposite the receiving opening (44).

5. Coupling sleeve according to one of claims 1 to 4, characterised by
a) a central bore (116) in the piston (82) with a constricted central portion (118) which connects with expanded regions (120, 122) which are concave on both sides,
b) a locking ball (86), movable in the central bore (116) of the piston (82), the external diameter of said locking ball (86) being approximately as large as the internal diameter of the constricted portion (118), yet being smaller than the internal diameter of the expanded regions (120, 122),
c) a first locking ball spring (112), extending between the outlet valve cone (40) and the locking ball (86), pressing the outlet closure cone (40) against the outlet opening (36) and pressing the locking ball (86) away from the outlet opening (36), and
d) a second locking ball spring (114), extending between the locking ball (86) and the main valve cone (88), and pressing the main valve cone (88) on to the valve seat (104), and pressing the locking ball (86) in the direction of the outlet opening (36).

6. Coupling sleeve according to claim 5, characterised in that the radial duct (126) in the piston rod (94) is in connection with the central bore (116) at a point located relative to the constricted region (118) on the side opposite the piston head (92).

7. Coupling sleeve according to one of claims 3 to 6, characterised in that the size of the radial duct (126) let into the piston rod (94) is so selected that the latter operates as a flow-restricting screen.

8. Coupling sleeve according to one of claims 1 to 7, characterised in that there is secured inside the plug-in sleeve (32) an annular stroke-limiter (84) between the end cap (34) and a shoulder (98) formed in the interior of the plug-in sleeve (32), said stroke-limiter (84) limiting a movement of the piston (82) away from the end cap (34).

9. Coupling sleeve according to one of claims 1 to 8, characterised in that the main valve cone (88) has a blind bore into which at least a portion of the piston rod (94) extends.

10. Coupling sleeve according to claim 8 or 9, characterised in that the external diameter of at least a first region of the main valve cone (88) is approximately as large as the internal diameter of the annular stroke-limiter (84), and in that the first region within the stroke-limiter (84) is slidably disposed.

11. Coupling sleeve according to claim 10, characterised in that a second region of the main valve cone (88) has a larger diameter than the first region, and in that a pressure spring (106) is tensioned between the second region and the annular stroke-limiter (84).

12. Coupling sleeve according to one of claims 1 to 11, characterised in that the cam shafts (132) for a plurality of couplings may be actuated by one single lever (132).

13. Coupling sleeve according to claim 12, characterised in that the cam shafts are formed as a rod (132) mounted in the casing (10), corresponding cam surfaces (138, 140) being formed on said rod (132) in order to influence each of the couplings, and in that the rod (132) may be rotated by one lever (132).

14. Coupling sleeve according to one of claims 1 to 13, characterised in that two coupling sleeves are combined into one unit.

## Revendications

1. Manchon d'accouplement hydraulique (12, 14), avec
a) un boîtier (10), avec un perçage à gradins (16, 18), une chambre de puisard (20, 22) à une extrémité du perçage (16, 18), et un canal de liquide (24, 26) qui communique avec le perçage (16, 18),
b) une douille enfichable (32), creuse et sensiblement cylindrique, qui est disposée à translation dans le perçage (16, 18) et qui aboutit à la chambre de puisard (20, 22) par une extrémité et, à l'autre extrémité, contient une partie réceptrice avec
1) une ouverture réceptrice (44), destinée à recevoir un élément d'accouplement enfichable (46) et dans la région de laquelle se trouvent plusieurs perçages (50) orientés sensiblement radialement et mutuellement distants sur la périphérie de la douille enfichable (32)
2) plusieurs billes d'isolement (48) disposées dans les perçages (50) et
3) un siège de soupape principale (104), qui est formé par une surface intérieure de la douille enfichable (32) au voisinage de l'ouverture réceptrice (44),
c) une douille de commande annulaire (52), qui entoure l'extrémité de l'ouverture réceptrice de la douille enfichable (32) et dont la face intérieure présente une nervure (52) et une première région (58) de diamètre supérieur, en retrait par rapport à la nervure (54), la douille de commande (52) pressant les billes d'isolement (48) dans l'ouverture réceptrice (44) lorsque les boules d'isolement (48) se trouvent dans la région de la nervure (54), et permettant de déplacer les boules d'isolement (48) en dehors de la section de l'ouverture réceptrice (44) lorsque les boules d'isolement (48) se trouvent dans la région en retrait (58),
d) une première bague de blocage (72), dont un côté peut être amené en engagement avec un premier épaulement (76) de la douille enfichable (32) et un épaulement (80) du boîtier (10), et sur l'autre côté de laquelle agit un ressort de douille enfichable (70), qui est comprimé entre la première bague de blocage (72) et la douille de commande (52).
e) une calotte terminale (34), pénétrant dans la chambre de puisard (20, 22), qui ferme l'intérieur de la douille enfichable (32) vis-à-vis de la chambre de puisard (20, 22) et qui, pour la translation de la douille enfichable (32), est en prise avec une face de came (140) pouvant être déplacée par un levier (132),
f) un piston (82), disposé à coulissement dans la calotte terminale (34) et la douille enfichable (32), avec
1) une tête de piston (92), qui est reçue à coulissement par la calotte terminale (34), une chambre de piston (93) étant formée entre la tête de piston (92) et la calotte terminale (34),
2) une tige de piston (94), qui s'étend en direction de l'ouverture réceptrice (44),
g) des moyens créant une liaison fluidique entre le canal de liquide (24, 26) et la chambre de piston (93),
h) un moyen de soupape (36), qui décharge la pression dans la chambre de piston (93) suite à l'actionnement du levier (132) ou à la translation de la douille enfichable (32) dans la direction opposée à l'ouverture réceptrice (44),
i) un cône de soupape principale (88), qui est relié en déplacement à la tige de piston (94) et coopère avec le siège de soupape principale (104) pour obturer l'ouverture réceptrice (44) vis-à-vis du reste de la douille enfichable (32), et
j) un moyen de ressort pour précontraindre le cône de soupape principale (88) contre le siège de soupape principale (104),
**caractérisé** en ce que
k) la douille de commande (52) présente une seconde région (56) de diamètre supérieur, en retrait par rapport à la nervure (54), de telle sorte que les deux régions en retrait (56, 58) se trouvent de part et d'autre de la nervure (54),
l) il est prévu une seconde bague de blocage (74), dont un côté peut être amené en engagement avec un second épaulement (78) de la douille enfichable (32) et indirectement ou directement avec la douille de commande (52), et sur l'autre côté de laquelle le ressort de douille enfichable (70) agit de telle sorte que la douille enfichable (32) peut être translatée axialement dans les deux directions à partir de sa position de repos, dans laquelle les deux bagues de blocage (72, 74) s'appliquent contre les épaulements associés (76, 80 ; 78) ou encore contre la douille enfichable (32), ou contre une douille d'écartement (66), le ressort de douille enfichable (70) étant comprimé.

2. Manchon d'accouplement selon la revendication 1, **caractérisé** par
a) une calotte terminale (34) contenant un canal de décharge (36), qui s'étend entre la chambre de piston (93) et la chambre de puisard (20, 22),
b) un cône de soupape de décharge (40), qui est disposé dans le canal de décharge (36) et travaille contre un siège de soupape pour obturer le canal de décharge (36), et qui porte un appendice (42) qui s'étend vers l'extérieur à travers le canal de décharge (36),
c) un arbre à cames (130), qui est monté à rotation dans le boîtier (10), au voisinage de la calotte terminale (34), et qui présente une face de came (140) qui, lors de la rotation, entre en prise avec la calotte terminale (34),
d) un levier (132), qui permet de faire tourner l'arbre à cames (130), et
e) une face de came (138) sur l'arbre à cames (130), qui entre en prise avec l'appendice (42) lors de la rotation de l'arbre à cames (130), la calotte terminale (34) et la face de came (138) étant conformées de telle sorte que, lors d'une rotation de l'arbre à cames (130) ou d'une translation de la douille enfichable (32), la face de came de soupape de décharge (138) appuie d'abord contre l'appendice (42), avant que la face de came de calotte terminale (140) appuie contre la calotte terminale (34).

3. Manchon d'accouplement selon la revendication 1 ou 2, **caractérisé** en ce que les moyens créant une liaison fluidique entre le canal de liquide (24, 26) et la chambre de piston (93) comprennent un perçage central (116), qui s'étend au moins sur une partie du piston (82), de la tête de piston (92) à la tige de piston (94), et un canal sensiblement radial (126) dans la tige de piston (94), canal qui relie l'extérieur de la tige de piston (94) au perçage central (116).

4. Manchon d'accouplement selon l'une quelconque des revendications 1 à 3, **caractérisé** en ce que les moyens créant une liaison fluidique entre le canal de liquide (24, 26) et la chambre de piston (93) comprennent au moins un passage (124), pratiqué dans la douille enfichable (32), qui forme une liaison fluidique entre l'intérieur de la douille enfichable (32) et le canal (24, 26) s'étendant dans le boîtier (10), le ou les passages (124) se trouvant, par rapport au siège de soupape principale (104), du côté de la douille enfichable (32) qui est opposé à l'ouverture réceptrice (44).

5. Manchon d'accouplement selon l'une quelconque des revendications 1 à 4, **caractérisé** par
a) un perçage central (116) dans le piston (82), avec une partie médiane rétrécie (118), à laquelle se raccordent de part et d'autre des régions élargies renflées (120, 122),
b) une bille d'obturation (86), mobile dans le perçage central (116) du piston (82) et dont le diamètre extérieur est approximativement égal au diamètre intérieur de la partie rétrécie (118), mais inférieur au diamètre intérieur des régions élargies (120, 122),
c) un premier ressort de bille d'obturation (112), qui s'étend entre le cône de soupape de décharge (40) et la bille d'obturation (86), et qui presse le cône de soupape de décharge (40) contre l'ouverture de décharge (36), et la bille d'obturation (86) en éloignement de l'ouverture de décharge (36), et
d) un second ressort de bille d'obturation (114), qui s'étend entre la bille d'obturation (86) et le cône de soupape principale (88), et qui presse le cône de soupape principale (88) sur le siège de soupape (104), et la bille d'obturation (86) en direction de l'ouverture de décharge (36).

6. Manchon d'accouplement selon la revendication 5, **caractérisé** en ce que le canal radial (126) dans la tige de piston (94) communique avec le perçage central (116) en un endroit qui se trouve, par rapport à la région rétrécie (118), sur le côté opposé à la tête de piston (92).

7. Manchon d'accouplement selon l'une quelconque des revendications 3 à 6, **caractérisé** en ce que la taille du canal radial (126) pratiqué dans la tige de piston (94) est choisie de telle sorte que ce passage sert de limiteur d'écoulement.

8. Manchon d'accouplement selon l'une quelconque des revendications 1 à 7, **caractérisé** en ce qu'un limiteur de course annulaire (84) est fixé à l'intérieur de la douille enfichable (32), entre la calotte terminale (34) et un épaulement (98) formé à l'intérieur de la douille enfichable (32), et il limite le déplacement du piston (82) en éloignement de la calotte terminale (34).

9. Manchon d'accouplement selon l'une quelconque des revendications 1 à 8, **caractérisé** en ce que le cône de soupape principale (88) présente un trou borgne dans lequel s'étend au moins une partie de la tige de piston (94).

10. Manchon d'accouplement selon la revendication 8 ou 9, **caractérisé** en ce que le diamètre extérieur d'au moins une première région du cône de soupape principale (88) est approximativement égal au diamètre intérieur du limiteur de course annulaire (84), et en ce que cette première région est disposée à coulissement à l'intérieur du limiteur de course (84).

11. Manchon d'accouplement selon la revendication 10, **caractérisé** en ce qu'une seconde région du cône de soupape principale (88) présente un diamètre plus grand que celui de la première région, et en ce qu'un ressort de compression (106) est monté entre cette seconde région et le limiteur de course annulaire (84).

12. Manchon d'accouplement selon l'une quelconque des revendications 1 à 11, **caractérisé** en ce que les arbres à cames (130) pour plusieurs accouplements peuvent être actionnés par un seul levier (132).

13. Manchon d'accouplement selon la revendication 12, **caractérisé** en ce que les arbres à cames sont réalisés sous la forme d'une barre (130) montée dans le boîtier (10), sur laquelle sont formées des faces de came correspondantes (138, 140) pour agir sur chacun des accouplements, et en ce que l'unique levier (132) permet de faire tourner la barre (130).

14. Manchon d'accouplement selon l'une quelconque des revendications 1 à 13, **caractérisé** en ce que deux manchons d'accouplement sont réunie en une unité.
